# EUROPÄISCHE PATENTSCHRIFT

(11) **EP 2 743 057 B1**
(45) Veröffentlichungstag und Bekanntmachung des Hinweises auf die Patenterteilung: **22.02.2017**
(21) Anmeldenummer: 13197544.3
(22) Anmeldetag: 16.12.2013
(51) Int. Cl.: B29C 49/64, B29C 49/06, B29C 49/28, B29C 49/68, B29C 49/78

(54) **VORRICHTUNG ZUM ERWÄRMEN VON KUNSTSTOFFVORFORMLINGEN**
DEVICE FOR HEATING PLASTIC PRE-FORMS
DISPOSITIF DE CHAUFFAGE DE PRÉFORMES EN MATIÈRE SYNTHÉTIQUE

(30) Priorität: 17.12.2012 DE 102012112370
(43) Veröffentlichungstag der Anmeldung: 18.06.2014
(73) Patentinhaber: Krones AG, 93073 Neutraubling (DE)
(72) Erfinder: Kursawe, Andreas, 93073 Neutraubling (DE); Senn, Konrad, 93073 Neutraubling (DE)
(74) Vertreter: Bittner, Bernhard

(56) Entgegenhaltungen:
- EP-A1- 0 849 067
- EP-A2- 2 447 038
- DE-A1-102008 012 757
- DE-A1-102009 015 519
- DE-A1-102009 047 541
- DE-U1- 20 309 576

## Beschreibung

Die vorliegende Erfindung bezieht sich auf eine Vorrichtung zum Erwärmen von Kunststoffvorformlingen. Im Bereich der Getränke herstellenden Industrie ist es üblich geworden, zur Abfüllung Kunststoffbehältnisse zu verwenden. Dabei werden üblicherweise Kunststoffvorformlinge durch Blasformmaschinen und insbesondere Streckblasmaschinen zu den Kunststoffbehältnissen umgeformt. Bei diesen Umformungsprozessen ist es erforderlich, dass die Kunststoffvorformlinge zunächst erwärmt werden. Zu diesem Zweck werden im Stand der Technik üblicherweise Infrarotöfen eingesetzt, durch welche die Kunststoffvorformlinge hindurchgeführt werden. Dabei werden die Kunststoffvorformlinge an einer Reihe von Erwärmungsmodulen vorbeigeführt.

In jüngerer Zeit ist man jedoch auch dazu übergegangen, jeweils individuelle Erwärmungseinrichtungen bzw. Heizkavitäten vorzusehen, mittels derer die einzelnen Kunststoffvorformlinge erwärmt werden. Diese Heizkavitäten befinden sich dabei üblicherweise an einem gemeinsamen Träger. Eine aus dem Stand der Technik bekannt gewordene Vorgehensweise bei der Erwärmung von Kunststoffvorformlingen sind Mikrowellenöfen. Dabei dienen die einzelnen Arbeitsstationen eines Mikrowellenresonators dazu, die PET-Kunststoffvorformlinge auf ein definiertes Temperaturprofil zu erwärmen. Zur Prozessführung wird einerseits die Temperatur der Kunststoffvorformlinge in der Heizzone beispielsweise mittels Pyrometern kontrolliert und damit eine Verfahrgeschwindigkeit und auch ein Abschaltpunkt angepasst. Andererseits wird der Resonator auch in seinem Leistungsmaximum gehalten. Um dies zu erreichen, sind die einzelnen Arbeitsstationen oftmals mit Pyrometern, Plasmasensoren, auch Regulierungseinrichtungen wie etwa Tuningstiften, daneben jedoch auch mit weiteren Messeinrichtungen ausgestattet.

Im Stand der Technik werden die einzelnen Arbeitsstationen durch eine zentrale Steuerungseinrichtung wie eine zentrale SPS gesteuert und sind üblicherweise mit dieser direkt verdrahtet. Die Prozessführung einer Arbeitsstation erfolgt weitgehend unabhängig von anderen Arbeitsstationen und auch üblicherweise unabhängig von dem Träger, beispielsweise einem Rundläufer. Dabei tritt jedoch das Problem auf, dass die Verdrahtung sehr aufwendig ist, da viel Sensorik und Aktorik pro Arbeitsstation notwendig ist und diese einzelnen Elemente jeweils angesteuert werden müssen. Auch für den Austausch muss entsprechend viel Verdrahtung gelöst und wieder verdrahtet werden. Ein Austausch einzelner Arbeitsstationen im Werk ist daher aufwendig. Daneben können auch die Arbeitsstationen nicht in Serie als mechatronische Einheit vorgefertigt werden, wodurch sich eine relativ geringe Flexibilität ergibt. Daneben muss bei jeder Änderung der Zahl der Arbeitsstationen auch die Rechenleistung und die Verdrahtung angepasst werden.

Aus der EP 2 447 038 A2 ist eine Vorrichtung zum Herstellen von Kunststoffbehältnissen mit einem Erwärmungsmodul, welches Kunststoffvorformling erwärmt bekannt. Dabei weist das Erwärmungsmodul eine Transporteinrichtung auf, welche die Kunststoffvorformlinge während des Erwärmungsvorgangs transportiert.

Die DE 10 2008 012 757 A1 offenbart eine Vorrichtung zum Erzeugen von Kunststoffbehältnissen mit einer Transporteinrichtung, an der eine Vielzahl von Blasstationen zum Expandieren von Vorformlingen zu Kunststoffbehältnissen angeordnet ist.

Die DE 10 2009 015 519 A1 zeigt eine Vorrichtung zum Umformen von Kunststoffvorformlingen zu Kunststoffbehältnissen mit einer Vielzahl von Blasstationen, welche jeweils wenigstens einen Aufnahmeraum aufweisen, innerhalb dessen die Kunststoffvorformlinge zu den Kunststoffbehältnissen expandiert werden.

Die Druckschrift DE 10 2009 047 541 A1 beschreibt einen Ofen zum Konditionieren von Vorformlingen mit einem Heizrad, an dem mehrere Heizmodule zum Erwärmen je eines Vorformlings angeordnet sind.

Aus der EP 0 849 067 A1 geht ein Heizverfahren zum Erhitzen eines Vorformlings für eine Streckblasmaschine hervor.

Aus der DE 203 09 576 U1 ist eine Blasmaschine zum Herstellen von Hohlkörpern aus thermoplastischem Kunststoff bekannt.

Der vorliegenden Erfindung liegt daher die Aufgabe zugrunde, eine Vorrichtung zum Erwärmen von Kunststoffvorformlingen zur Verfügung zu stellen, die in ihrem Aufbau einfacher gegenüber dem Stand der Technik gehalten ist. Dabei soll insbesondere auch ein Verkabelungs- bzw. Verdrahtungsaufwand reduziert werden. Diese Aufgaben werden erfindungsgemäß durch den Gegenstand des unabhängigen Anspruchs erreicht.

Vorteilhafte Ausführungsformen und Weiterbildungen sind Gegenstand der Unteransprüche.

Eine erfindungsgemäße Vorrichtung zum Erwärmen von Kunststoffvorformlingen weist einen beweglichen Träger auf, an dem eine Vielzahl von Erwärmungseinrichtungen angeordnet ist. Dabei sind diese Erwärmungseinrichtungen unabhängig voneinander steuerbar und weisen jeweils ein Erwärmungselement sowie wenigstens ein Regulierungselement zum Regulieren einer Erwärmungsleistung auf. Weiterhin weisen diese Erwärmungseinrichtungen jeweils wenigstens einen Erwärmungsbereich auf, innerhalb dessen die Kunststoffvorformlinge erwärmbar sind sowie eine Bewegungseinrichtung, welche die Kunststoffvorformlinge in diesen Erwärmungsbereich einführt.

Erfindungsgemäß ist jeder Erwärmungseinrichtung jeweils eine Steuerungseinrichtung zum Steuern eines Erwärmungsvorgangs zugeordnet.

Dabei ist es möglich und bevorzugt, dass jede Erwärmungseinrichtung genau eine Steuerungseinrichtung aufweist und damit auch jeder dieser Steuerungseinrichtung genau eine Erwärmungseinrichtung zugeordnet ist. Es wäre jedoch auch möglich, dass Module aus mehreren, beispielsweise 2 - 4 Erwärmungseinrichtungen gebildet werden und diesen Modulen dabei genau eine Steuerungseinrichtung zugeordnet ist. Bevorzugt bilden diese Steuerungseinrichtungen jeweils integrale Bestandteile der jeweiligen Erwärmungseinrichtungen aus.

Es wird daher vorgeschlagen, anstelle der im Stand der Technik üblichen zentralen Steuerung jeder einzelnen Erwärmungseinrichtung eine eigene Steuereinrichtung zuzuordnen. Vorteilhaft handelt es sich bei dem beweglichen Träger um einen drehbaren Träger, so dass die einzelnen Erwärmungseinrichtungen vorteilhaft entlang eines kreisförmigen Pfades bewegt werden. Bevorzugt handelt es sich bei der Erwärmungseinrichtung um einen Rundläuferofen.

Vorteilhaft bewegt die Bewegungseinrichtung die Kunststoffvorformlinge in den Erwärmungsbereich in einer Längsrichtung der Kunststoffvorformlinge.

Es wird daher vorgeschlagen, dass die Prozessführung jeder Erwärmungseinrichtung bevorzugt unabhängig von einer zentralen Steuerung erfolgt. Damit ist eine Möglichkeit geschaffen, dass jede einzelne Erwärmungseinrichtung eine eigene Steuerungseinrichtung aufweist, welche den Prozess autonom führt. Es ist dabei möglich, dass lediglich ein Startsignal gegeben wird.

Weiterhin ist durch die erfindungsgemäße Vorgehensweise auch eine sehr schnelle Steuerung möglich, da eine Steuerung im Millisekundenbereich erfolgen kann. Dem gegenüber muss im Stand der Technik zur gleichzeitigen Steuerung mehrerer Erwärmungseinrichtungen durch eine Steuereinheit eine sehr leistungsfähige SPS eingesetzt werden. Durch die erfindungsgemäße Vorgehensweise wird damit auch die Service-Freundlichkeit erhöht und andererseits können die Stückkosten reduziert werden und auch unabhängig von einer Rechenleistung einer zentralen Steuerung werden.

Vorteilhaft ist die Steuerungseinrichtung derart ausgeführt, dass sie für die ihr zugeordnete Erwärmungseinrichtung die gesamte Prozessführung übernehmen kann. Dabei ist es dann möglich, dass von einer übergeordneten Maschinensteuerung nur wenige Steuerbefehle kommen, wie etwa ein Startbefehl.

Bei einer weiteren vorteilhaften Ausführungsform weist daher die Vorrichtung auch eine zentrale Steuereinheit auf, die mit den einzelnen Steuerungseinrichtungen der einzelnen Erwärmungsstationen kommuniziert. Dabei kann jedoch diese Kommunikation relativ einfach ausgestaltet sein und die zentrale Steuereinheit möglicherweise nur wenige Befehle ausgeben, wie beispielsweise einen Startbefehl, um einen Erwärmungsvorgang einzuleiten, oder weitere Befehle, welche den Abschluss oder die Beendigung eines Erwärmungsvorgangs anzeigen.

Vorteilhaft sind dabei zwischen den einzelnen Erwärmungseinrichtungen bzw. deren Steuereinrichtungen und der zentralen Steuereinheit Kommunikationsschnittstellen vorgesehen. Daneben kann auch zwischen dem Träger und den einzelnen Erwärmungseinrichtungen eine mechanische Verbindungseinrichtung vorgesehen sein.

Im Gegensatz zum Stand der Technik ist damit jede Erwärmungseinrichtung ein eigenständiges und insbesondere auch fertig verdrahtetes Modul. Zur Installation dieses Moduls ist es lediglich erforderlich, dieses mit dem Träger bzw. Rundläufer mechanisch zu befestigen und an eine Leistungsversorgung sowie gegebenenfalls an eine Kommunikationsschnittstelle an der Hauptmaschine anzuschließen.

Es wäre zusätzlich auch möglich, eine einzelne Erwärmungseinrichtung als eigenständiges Gerät zu betreiben, wodurch sich weitere Anwendungen ergeben.

Daneben kann aufgrund der Stückzahl auch ein kompakter und günstiger Microcontroller zum Einsatz kommen, da dieser auch individuell auf die Bedürfnisse der einzelnen Erwärmungseinrichtungen angepasst werden kann und nicht etwa auf entsprechende Erweiterungen der Maschine reagieren muss. Daneben ist durch die hier vorgeschlagene dezentrale Anordnung auch eine Einsparung an Bauraum möglich. Daneben kann auch eine Rechenleistung der zentralen Steuereinheit unabhängig von der Anzahl der einzelnen Arbeitsstationen sein.

Bei einer weiteren vorteilhaften Ausführungsform weist auch jede Erwärmungseinrichtung eine Leistungsmesseinrichtung zum Messen einer Leistung auf. Dabei kann beispielsweise eine Leistungseinrichtung zum Messen einer elektrischen Leistung vorgesehen sein. Vorteilhaft weist auch jede Erwärmungseinrichtung eine Temperaturmesseinrichtung zur Messung wenigstens einer Temperatur und insbesondere einer Temperatur der Kunststoffvorformlinge auf. Dabei können Temperaturmesseinrichtungen vorgesehen sein, welche eine Temperatur der Kunststoffvorformlinge berührungslos erfassen. Daneben ist es auch möglich, dass jede Erwärmungseinrichtung mehr als eine derartige Temperaturmesseinrichtung aufweist, so dass insbesondere die Temperaturen unterschiedlicher Bereiche des jeweiligen Kunststoffvorformlings gemessen werden können.

Vorteilhaft ist wenigstens eine Messeinrichtung jeder Erwärmungseinrichtung aus einer Gruppe von Messeinrichtungen ausgewählt, welche Pyrometer, Plasmasensoren, Leistungsmesser und dergleichen enthält. Daneben weist auch vorteilhaft jede Erwärmungseinrichtung eine Bewegungseinrichtung auf, welche beispielsweise ein Rotationsmotor oder auch ein Linearantrieb, wie etwa eine Servo-Z-Achse, sein kann. Daneben weist vorteilhaft jede Erwärmungseinrichtung mehrere derartiger Antriebe auf, so dass insbesondere sowohl eine Linearbewegung als auch eine Rotationsbewegung möglich ist. Daneben kann es sich bei der Leistungsregulierungseinrichtung beispielsweise um sogenannte Tuningstifte handeln, welche im Falle einer Mikrowellenerwärmung in einen Bereich eines Wellenhohlleiters oder auch eines Resonators gefahren werden können, um so die auf die Kunststoffvorformlinge aufzubringende Leistung anpassen zu können.

Bei einer weiteren vorteilhaften Ausführungsform ist jede Erwärmungseinrichtung modulartig ausgebildet und ist bevorzugt in ihrer Gesamtheit von dem Träger entfernbar und/oder an den Träger montierbar. Dabei wird vorgeschlagen, dass jede Erwärmungseinrichtung ein eigenständiges Erwärmungsmodul mit eigener Steuerung ist bzw. aufweist.

Bei einer weiteren vorteilhaften Ausführungsform weist die Vorrichtung eine zentrale Leistungsversorgungseinheit auf, welche die einzelnen Erwärmungseinrichtungen mit Energie und insbesondere mit elektrischer Energie versorgt. Auch diese Leistungsversorgungseinheit kann dabei auf dem beweglichen Träger angeordnet sein.

Vorteilhaft weist jede Erwärmungseinrichtung einen Wellenhohlleiter zum Leiten von Mikrowellen auf. Weiterhin ist es möglich, dass jede einzelne Erwärmungseinrichtung eine Mikrowellenerzeugungseinheit aufweist. Bei einer weiteren vorteilhaften Ausführungsform weist jede Erwärmungseinrichtung einen Resonator auf, in den die Kunststoffvorformlinge einführbar sind und in dem die Kunststoffvorformlinge erwärmt werden können. Dabei ist es möglich, dass dieser Resonator die einzelnen Kunststoffvorformlinge vollständig während des Erwärmungsvorgangs bezüglich ihrer Längsachse umgibt.

Die vorliegende Erfindung ist weiterhin auf ein Verfahren zum Erwärmen von Kunststoffvorformlingen gerichtet, wobei die Kunststoffvorformlinge mittels einer Transporteinrichtung entlang eines vorgegebenen Transportpfades transportiert werden und während dieses Transports erwärmt werden. Dabei weist die Transporteinrichtung einen bewegbaren Träger auf, an dem eine Vielzahl von Erwärmungseinrichtungen angeordnet ist, wobei jede dieser Erwärmungseinrichtungen wenigstens einen und bevorzugt genau einen ihr zugeordneten Kunststoffvorformling erwärmt und dieser Kunststoffvorformling mittels einer Bewegungseinrichtung in einen Erwärmungsbereich der diesen Kunststoffvorformling erwärmenden Erwärmungseinrichtung eingeführt wird.

Erfindungsgemäß wird jede Erwärmungseinrichtung von einer dieser Erwärmungseinrichtungen jeweils zugeordneten Steuerungseinrichtung gesteuert. Insbesondere handelt es sich bei der Steuerungseinrichtung um eine Regeleinrichtung, welche diesen Erwärmungsvorgang regelt.

Bei einem weiteren vorteilhaften Verfahren kommuniziert eine zentrale Steuereinheit mit den Steuerungseinrichtungen der einzelnen Erwärmungseinrichtungen. Vorteilhaft gibt dabei diese zentrale Steuereinheit lediglich einzelne Steuerbefehle für den Erwärmungsvorgang aus, wie beispielsweise einen Startbefehl. Der eigentliche Erwärmungsprozess wird vorzugsweise von den einzelnen Steuerungseinrichtungen der jeweiligen Erwärmungseinrichtungen gesteuert bzw. geregelt. Dabei ist es beispielsweise möglich, dass die einzelnen Steuerungseinrichtungen der Erwärmungseinrichtungen ein Verfahrprofil bzw. ein Bewegungsprofil für die Bewegung des Kunststoffvorformlings in die Erwärmungseinheiten hinein steuert und die zentrale Steuerung jeweils lediglich den Befehl gibt, dass nun mit einem Erwärmungsvorgang begonnen werden kann.

Bei einem weiteren vorteilhaften Verfahren gibt die zentrale Steuereinheit an die einzelnen Steuerungseinrichtungen Befehle aus, welche aus einer Gruppe von Befehlen ausgewählt sind, welche Startbefehle für den Beginn eines Erwärmungsvorgangs, Stoppbefehle für ein Beenden des Erwärmungsvorgangs und dergleichen enthält. Dabei ist es möglich, dass die zentrale Steuereinheit diese Befehle auch in Abhängigkeit von einer Position der einzelnen Erwärmungseinrichtungen in der Umfangsrichtung der Vorrichtung, beispielsweise einer Winkelposition der einzelnen Kunststoffvorformlinge, ausgibt. So ist es beispielsweise möglich, dass nach der Übernahme von Kunststoffvorformlingen durch eine bestimmte Erwärmungseinrichtung an einer gewissen Winkelposition stets mit dem Erwärmungsvorgang begonnen wird und der Erwärmungsvorgang an einer weiteren Winkelposition stets angehalten wird. Auf diese Weise kann die zentrale Steuereinheit sehr einfach gehalten werden.

Die vorliegende Erfindung ist weiterhin auf eine Erwärmungseinrichtung zum Erwärmen von Kunststoffvorformlingen gerichtet, welche modulartig ausgebildet ist und ein Erwärmungselement zum Erwärmen von Kunststoffvorformlingen aufweist, sowie wenigstens ein Regulierungselement zum Regulieren einer Erwärmungseinrichtung. Weiterhin weist diese Erwärmungseinrichtung einen Erwärmungsbereich auf, innerhalb dessen die Kunststoffvorformlinge erwärmbar sind sowie eine Bewegungseinrichtung, welche die Kunststoffvorformlinge in diesen Erwärmungsbereich einführen. Dabei weist diese Erwärmungseinrichtung eine Steuerungseinrichtung zum Steuern eines Erwärmungsvorgangs auf. Damit wird auch vorgeschlagen, dass eine einzelne Erwärmungseinrichtung ihre eigene Steuerungseinrichtung aufweist, welche im Wesentlichen selbständig einen Erwärmungsvorgang steuern, bzw. regeln kann. Vorteilhaft weist die Erwärmungseinrichtung auch eine Vielzahl von Messeinrichtungen auf, welche physikalische Parameter des Erwärmungsvorgangs, wie beispielsweise eine Leistung und/oder eine Temperatur, erfassen, wobei bevorzugt die Steuerungseinrichtung den Erwärmungsvorgang auch in Abhängigkeit von diesen erfassten Werten bzw. Parametern steuert bzw. regelt.

Die vorliegende Erfindung ist weiterhin auf eine Vorrichtung zum Herstellen von Kunststoffbehältnissen gerichtet. Diese Vorrichtung weist dabei eine Erwärmungsvorrichtung der oben beschriebenen Art auf sowie eine dieser nachgeordnete Umformungsvorrichtung zum Umformen von Kunststoffvorformlingen zu Kunststoffbehältnissen. Vorteilhaft handelt es sich bei dieser Vorrichtung zum Umformen von Kunststoffvorformlingen zu Kunststoffbehältnissen um eine Blasformmaschine und insbesondere um eine Streckblasmaschine. Dabei weist vorteilhaft diese Umformungsvorrichtung ebenfalls einen drehbaren Träger auf, an dem eine Vielzahl von Umformungsstationen zum Erwärmen der Kunststoffvorformlinge vorgesehen ist. Vorteilhaft ist dabei eine Steuerungseinrichtung vorgesehen, mittels derer feststellbar bzw. bestimmbar ist, welcher von einer bestimmten Umformungsstation umzuformende Kunststoffvorformling von welcher Erwärmungseinrichtung erwärmt wurde. Auf diese Weise kann ein Umformungsvorgang auch in Abhängigkeit von dem individuellen vorangegangenen Erwärmungsvorgang gesteuert werden, bzw. es können Messwerte bzw. Parameter des Erwärmungsvorgangs auch für den nachfolgenden Umformungsvorgang verwendet werden. Bei den oben beschriebenen Erwärmungsvorrichtungen handelt es sich bei einer Ausführungsform um Mikrowelleneinheiten. Es ist jedoch auch möglich, dass es sich bei den Erwärmungsvorrichtungen um sogenannte STIR-Erwärmungseinrichtungen handelt. Dabei werden die Kunststoffvorformlinge mittels Infrarot erwärmt, wobei zusätzlich vorteilhaft noch ein stangenförmiger Körper während der Erwärmung in einem Innenraum der Kunststoffvorformlinge eingeführt wird. Vorteilhaft weisen bei diesen Ausgestaltungen die Erwärmungseinrichtungen daher jeweils einen stangenförmigen Körper auf, der in einen Innenraum der Kunststoffvorformlinge einführbar ist. Daneben ist auch eine Bewegungseinrichtung vorgesehen, welche diesen stangenartigen Körper in die Kunststoffvorformlinge einführt. Dabei wäre es sowohl möglich, diesen stangenartigen Körper zu bewegen als auch umgekehrt eine Bewegung des Kunststoffvorformlings in ihrer Längsrichtung zum Einführen des stangenartigen Körpers vorzusehen.

Weitere Vorteile und Ausführungsformen ergeben sich aus den beigefügten Figuren.

Darin zeigen:
- Fig. 1: Eine schematische Darstellung einer erfindungsgemäßen Vorrichtung;
- Fig. 2: eine detailliertere Darstellung eines Steuerungskonzepts; und
- Fig. 3: eine Darstellung einer einzelnen Erwärmungseinrichtung.

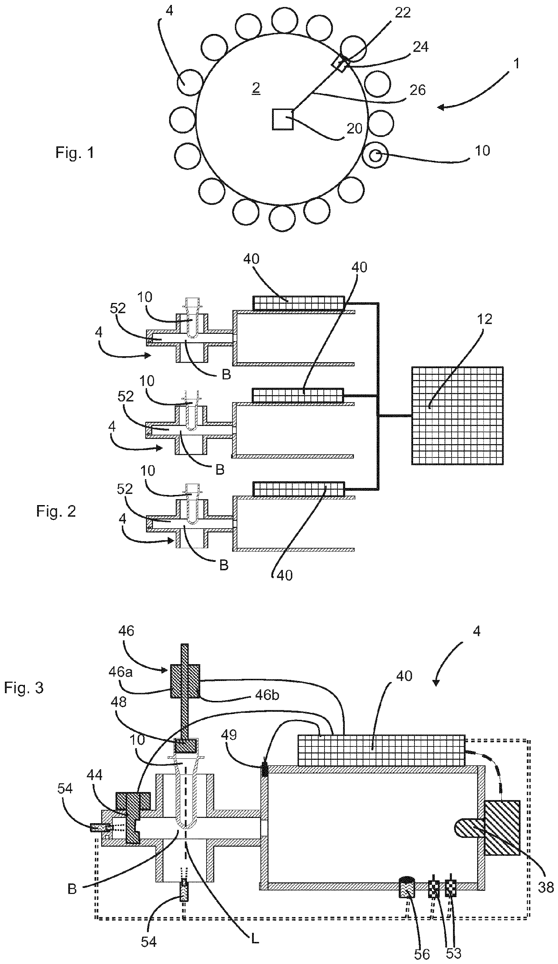

Fig. 1 zeigt eine grob schematische Darstellung einer erfindungsgemäßen Vorrichtung 1 zum Erwärmen von Kunststoffvorformlingen 10 (nur ein Kunststoffvorformling schematisch angedeutet). Diese Vorrichtung 1 weist dabei einen drehbaren Träger 2 auf, an dem eine Vielzahl von Erwärmungseinrichtungen 4 angeordnet ist. Dies bedeutet, dass die einzelnen Kunststoffvorformlinge 10 während ihrer Bewegung entlang eines kreisförmigen Pfades in den einzelnen Erwärmungseinrichtungen 4 erwärmt werden.

Das Bezugszeichen 22 kennzeichnet, grob schematisch eine mechanische Verbindungseinrichtung, mit der die Erwärmungseinrichtung an dem Träger (2) angeordnet werden kann.

Das Bezugszeichen 24 kennzeichnet schematisch eine elektrische Verbindungseinrichtung, um die Erwärmungseinrichtung elektrisch anzubinden. Diese elektrische Verbindungseinrichtung stellt dabei insbesondere eine elektrische Verbindung zwischen der Steuereinrichtung der jeweiligen Erwärmungseinrichtung und einer zentralen Steuereinheit her. Daneben kann die elektrische Verbindungseinrichtung 24 auch eine Verbindung zwischen einer zentralen Energieversorgungseinheit 20 und der jeweiligen Erwärmungseinrichtung herstellen. Diese Energieversorgungseinheit 20 kann dabei auf dem Träger 2 angeordnet sein. Es wäre jedoch auch denkbar, dass eine stationäre Energieversorgungseinheit vorgesehen ist und die elektrische Versorgung über Mittel wie Schleifringe auf den Träger übertragen wird. Das Bezugszeichen 26 kennzeichnet eine elektrische Verbindungsleitung zur Versorgung der einzelnen Erwärmungseinrichtungen 4.

Fig. 2 zeigt eine Darstellung zur Veranschaulichung des hier vorgeschlagenen Steuerkonzepts. Dabei sind hier drei Erwärmungseinrichtungen 4 dargestellt, die jeweils eigene Steuerungseinrichtungen bzw. Regeleinrichtungen 40 aufweisen. Diese Steuerungseinrichtungen 40 steuern dabei die individuelle Erwärmung der einzelnen Kunststoffvorformlinge 10, die innerhalb der jeweiligen Resonatoren 52 bzw. der Erwärmungsbereiche B erwärmt werden. Daneben ist eine zentrale Steuereinheit 12 vorgesehen, welche auch in Kommunikationsverbindung mit den Steuerungseinrichtungen 40 steht. Diese zentrale Steuereinheit 12 umfasst dabei vorteilhaft auch eine Energieversorgung (nicht gezeigt), um die einzelnen Erwärmungseinrichtungen 4 mit Energie und insbesondere mit elektrischer Energie zu versorgen. Dabei kann jedoch auch vorgesehen sein, dass die zentrale Steuerungseinheit 12 die jeweiligen Startbefehle an die Steuerungseinrichtungen 40 ausgibt. Vorteilhaft ist die zentrale Steuereinheit 12 dabei so ausgelegt, dass die Startbefehle an die einzelnen Steuerungseinrichtungen 40 zeitversetzt ausgegeben werden. Auf diese Weise kann der Energiebedarf zeitlich verteilt werden und das Auftreten von Leistungsspitzen kann verhindert werden.

Fig. 3 zeigt eine detailliertere Darstellung einer einzelnen Erwärmungseinrichtung 4. Diese Erwärmungseinrichtung 4 weist dabei einen in seiner Gesamtheit mit 46 bezeichneten Antrieb bzw. eine Bewegungseinrichtung auf, welche bewirkt, dass die Kunststoffvorformlinge 10 in den Resonator bzw. in den Erwärmungsbereich eingeführt werden. Dabei kann diese Bewegungseinrichtung 46 beispielsweise als Linearmotor mit einem Stator bzw. einem Primärteil 46a und einem beweglichen Sekundärteil 46b ausgebildet sein. Daneben kann die Bewegungseinrichtung auch eine Rotation der Kunststoffvorformlinge 10 bezüglich deren Längsachse L bewirken. Es wäre jedoch auch möglich, dass für die Erzeugung der Drehbewegung und der Linearbewegung zwei unterschiedliche Antriebe vorgesehen sind. Bei diesen Antrieben handelt es sich bevorzugt um Linearmotoren und/oder Servomotoren.

Das Bezugszeichen 48 kennzeichnet ein Halteelement, welches hier als Haltedorn ausgeführt ist, der in eine Mündung der Kunststoffvorformlinge eingeführt wird und diese so von innen hält. Man erkennt, dass auch diese Bewegungseinrichtung 46 von der Steuerungseinrichtung 40 gesteuert wird.

Das Bezugszeichen 44 kennzeichnet eine Regulierungseinheit, welche hier beispielsweise in den Resonator eingefahren werden kann, um so die auf die Kunststoffvorformlinge 10 aufgebrachte Mikrowellenleistung zu kontrollieren.

Die Bezugszeichen 54 kennzeichnen Temperaturmesseinrichtungen, die hier kontaktlos eine Temperatur der Kunststoffvorformlinge erfassen. Bei dieser Ausführungsform sind die Temperaturmesseinrichtungen als Pyrometer ausgeführt. Vorteilhaft sind hier zwei derartiger Temperaturmesseinrichtungen 54 vorgesehen, wobei eines dieser Pyrometer auf eine Unterseite bzw. einen Kuppenbereich des Kunststoffvorformlings 10 gerichtet ist und das andere auf einen seitlichen Wandungsbereich.

Weiterhin kann die Regulierungseinrichtung 44 auch eine Bewegungseinrichtung aufweisen, welche den Regulierungsstift bewegt, beispielsweise dreht oder in seiner Längsrichtung verschiebt. Daneben wäre es auch denkbar, dass mehrere derartiger Regulierungsstifte vorgesehen sind.

Das Bezugszeichen 49 bezieht sich auf eine weitere Sensoreinrichtung, wobei diese Sensoreinrichtung hier ein Temperatursensor ist, der bevorzugt eine Temperatur eines Gehäuseteils erfasst. Daneben sind noch weitere Messeinrichtungen 53 und 56 vorgesehen, wobei das Bezugszeichen 53 sich hier auf Mikrowellensensoren bezieht, welche eine Mikrowellenleistung bestimmen und das Bezugszeichen 56 einen Plasmasensor darstellt. Auch diese gesamten Messeinrichtungen bzw. Sensoren leiten ihre jeweiligen Messsignale an die Steuerungseinrichtung 40 weiter und diese Messsignale werden auch bei der Erwärmung des Kunststoffvorformlings 10 berücksichtigt. Man erkennt, dass auch die Regulierungseinrichtung 44 von der Steuerungseinrichtung 40 gesteuert wird.

Das Bezugszeichen 38 kennzeichnet eine Mikrowellenerzeugungseinrichtung, welche die Mikrowellen zum Erwärmen der Kunststoffvorformlinge erzeugt. Dabei ist es denkbar, dass eine derartige Mikrowellenerzeugungseinrichtung zentral angeordnet ist, bzw. für mehrere Erwärmungseinrichtungen dient, es wäre jedoch auch - und dies bevorzugt - möglich, dass jeder einzelnen Erwärmungseinrichtung jeweils eine Mikrowellenquelle 38 zugeordnet ist.

Weiterhin weist die Erwärmungseinrichtung (nicht gezeigte) Verbindungsmittel auf, um die Erwärmungseinrichtung 4 an den Träger 2 anzuordnen. Dabei handelt es sich bei diesen Verbindungsmitteln, wie oben erwähnt, bevorzugt sowohl um mechanische Verbindungsmittel als auch um elektrische Verbindungsmittel, mittels derer eine Energieversorgung und auch eine Kommunikationsverbindung mit der zentralen Steuereinheit 12 hergestellt werden kann.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: drehbarer Träger
- 4: Erwärmungseinrichtung
- 10: Kunststoffvorformlinge
- 12: zentrale Steuereinheit
- 20: Energieversorgungseinheit
- 22: mechanische Verbindungseinrichtung
- 24: elektrische Verbindungseinrichtung
- 26: elektrische Verbindungsleitung
- 38: Mikrowellenerzeugungseinrichtung
- 40: Steuerungseinrichtung
- 44: Regulierungseinheit
- 46: Antrieb/Bewegungseinrichtung
- 46a: Stator
- 46b: beweglicher Senkudärteil
- 48: Halteelement
- 49: Sensoreinrichtung
- 52: Resonator
- 53: Mikrowellensensor
- 54: Temperaturmesseinrichtung
- 56: Plasmasensor

- B: Erwärmungsbereiche
- L: Längsachse

## Patentansprüche

1. Vorrichtung (1) zum Erwärmen von Kunststoffvorformlingen (10), mit einem beweglichen Träger (2), an dem eine Vielzahl von Erwärmungseinrichtungen (4) angeordnet ist, wobei diese Erwärmungseinrichtungen (4) unabhängig voneinander steuerbar sind und jeweils ein Erwärmungselement (38, 52) sowie wenigstens ein Regulierungselement (44) zum Regulieren einer Erwärmungsleistung aufweisen, und wobei die Erwärmungseinrichtungen (4) jeweils einen Erwärmungsbereich (B), innerhalb dessen die Kunststoffvorformlinge (10) erwärmbar sind sowie eine Bewegungseinrichtung (46) aufweisen, welche die Kunststoffvorformlinge (10) in diesen Erwärmungsbereich (B) einführt,
**dadurch gekennzeichnet, dass**
jeder Erwärmungseinrichtung (4) jeweils eine Steuerungseinrichtung (40) zum Steuern eines Erwärmungsvorgangs zugeordnet ist.

2. Vorrichtung (1) nach Anspruch 1,
**dadurch gekennzeichnet, dass**
die Vorrichtung (1) eine zentrale Steuereinheit (12) aufweist, die mit den einzelnen Steuerungseinrichtungen (40) der einzelnen Erwärmungseinrichtungen (4) kommuniziert.

3. Vorrichtung (1) nach wenigstens einem der vorangegangenen Ansprüche,
**dadurch gekennzeichnet, dass**
jede Erwärmungseinrichtung (4) eine Leistungsmesseinrichtung (53, 56) zum Messen einer Leistung aufweist.

4. Vorrichtung (1) nach wenigstens einem der vorangegangenen Ansprüche,
**dadurch gekennzeichnet, dass**
jede Erwärmungseinrichtung (4) eine Temperaturmesseinrichtung (54) zum Messen einer Temperatur eines Kunststoffvorformlings (10) aufweist.

5. Vorrichtung (1) nach wenigstens einem der vorangegangenen Ansprüche,
**dadurch gekennzeichnet, dass**
die Vorrichtung (1) wenigstens eine Mikrowellenerzeugungseinrichtung (38) aufweist und jede Erwärmungseinrichtung (4) einen Resonator (52) zum Erwärmen der Kunststoffvorformlinge aufweist.

6. Vorrichtung (1) nach wenigstens einem der vorangegangenen Ansprüche,
**dadurch gekennzeichnet, dass**
jede Erwärmungseinrichtung (4) modulartig ausgebildet ist und in ihrer Gesamtheit von dem Träger (2) entfernbar und/oder an diesem Träger (2) montierbar ist.

7. Vorrichtung (1) nach wenigstens einem der vorangegangenen Ansprüche,
**dadurch gekennzeichnet, dass**
die Vorrichtung (1) eine zentrale Leistungsversorgungseinheit aufweist, welche die einzelnen Erwärmungseinrichtungen (4) mit elektrischer Energie versorgt.

8. Verfahren zum Erwärmen von Kunststoffvorformlingen (10), wobei die Kunststoffvorformlinge (10) mittels einer Transporteinrichtung entlang eines vorgegebenen Transportpfades transportiert werden und während dieses Transports erwärmt werden, wobei die Transporteinrichtung einen bewegbaren Träger (2) aufweist, an dem eine Vielzahl von Erwärmungseinrichtungen (4) angeordnet ist, wobei jede dieser Erwärmungseinrichtungen (4) wenigstens einen ihr zugeordneten Kunststoffvorformling (10) erwärmt und dieser Kunststoffvorformling (10) mittels einer Bewegungseinrichtung (46) in einen Erwärmungsbereich (B) der diesen Kunststoffvorformling erwärmenden Erwärmungseinrichtung (4) eingeführt wird,
**dadurch gekennzeichnet, dass**
jede Erwärmungseinrichtung (4) von einer dieser Erwärmungseinrichtung (4) jeweils zugeordneten Steuerungseinrichtung (40) gesteuert wird.

9. Verfahren nach Anspruch 8,
**dadurch gekennzeichnet, dass**
eine zentrale Steuereinheit (12) mit den Steuerungseinrichtungen (40) der einzelnen Erwärmungseinrichtungen (4) kommuniziert.

10. Verfahren nach Anspruch 8,
**dadurch gekennzeichnet, dass**
die zentrale Steuereinheit (12) an die einzelnen Steuerungseinrichtungen (40) Befehle ausgibt, welche aus einer Gruppe von Befehlen ausgewählt sind, welche Startbefehle für den Beginn eines Erwärmungsvorgangs, Stoppbefehle für ein Beenden des Erwärmungsvorgangs und dergleichen enthält.

## Claims

1. A device (1) for heating plastic pre-forms (10), with a movable carrier (2) on which a plurality of heating devices (4) are arranged, wherein these heating devices (4) are controllable independently of one another and have in each case a heating element (38, 52) as well as at least one regulating element (44) for regulating the heating output, and wherein the heating devices (4) have in each case one heating area (B) inside which the plastic pre-forms (10) are capable of being heated, and a movement device (46) which introduces the plastic pre-forms (10) into this heating area (B), **characterized in that** each heating device (4) has associated with it a control device (40) in each case in order to control a heating procedure.

2. A device (1) according to claim 1, **characterized in that** the device (1) has a central control unit (12) which communicates with the individual control devices (40) of the individual heating devices (4).

3. A device (1) according to at least one of the preceding claims, **characterized in that** each heating device (4) has a power measurement device (53, 56) for measuring a power.

4. A device (1) according to at least one of the preceding claims, **characterized in that** each heating device (4) has a temperature measurement device (54) for measuring a temperature of a plastic pre-form (10).

5. A device (1) according to at least one of the preceding claims, **characterized in that** the device (1) has at least one microwave generating device (38) and each heating device (4) has a resonator (52) for heating the plastic pre-forms.

6. A device (1) according to at least one of the preceding claims, **characterized in that** each heating device (4) is designed in the manner of a module and is capable of being removed in its entirety from the carrier (2) and/or of being mounted on this carrier (2).

7. A device (1) according to at least one of the preceding claims, **characterized in that** the device (1) has a central power supply unit which supplies the individual heating devices (4) with electrical energy.

8. A method of heating plastic pre-forms (10), wherein the plastic pre-forms (10) are transported by means of a transport device along a pre-defined transport path and are heated during this transport, wherein the transport device has a movable carrier (2) on which a plurality of heating devices (4) are arranged, wherein each of these heating devices (4) heats at least one plastic pre-form (10) associated with it, and this plastic pre-form (10) is introduced by means of a movement device (46) into a heating area (B) of the heating device (4) which heats this plastic pre-form, **characterized in that** each heating device (4) is controlled by a control device (40) associated in each case with this heating device (4).

9. A method according to claim 8, **characterized in that** a central control unit (12) communicates with the control devices (40) of the individual heating devices (4).

10. A method according to claim 8, **characterized in that** the central control unit (12) issues to the individual control devices (40) commands which are selected from a group of commands which contains start commands for the start of a heating procedure, stop commands for terminating the heating procedure and the like.

## Revendications

1. Dispositif (1) de chauffage de préformes en matière synthétique (10), comprenant un support (2) mobile, au niveau duquel une pluralité de systèmes de chauffage (4) est disposée, dans lequel lesdits systèmes de chauffage (4) peuvent être commandés indépendamment les uns des autres et présentent respectivement un élément de chauffage (38, 52) et au moins un élément de régulation (44) servant à réguler une puissance de chauffage, et dans lequel les systèmes de chauffage (4) présentent respectivement une zone de chauffage (B), à l'intérieur de laquelle les préformes en matière synthétique (10) peuvent être chauffées, et un système de déplacement (46), qui introduit les préformes en matière synthétique (10) dans ladite zone de chauffage (B),
**caractérisé en ce que**
respectivement un système de commande (40) servant à commander une opération de chauffage est associé à chaque système de chauffage (4).

2. Dispositif (1) selon la revendication 1,
**caractérisé en ce que**
le dispositif (1) présente une unité de commande (12) centrale, qui communique avec les divers systèmes de commande (40) des divers systèmes de chauffage (4).

3. Dispositif (1) selon au moins l'une quelconque des revendications précédentes,
**caractérisé en ce que**
chaque système de chauffage (4) présente un système de mesure de puissance (53, 56) servant à mesurer une puissance.

4. Dispositif (1) selon au moins l'une quelconque des revendications précédentes,
**caractérisé en ce que**
chaque système de chauffage (4) présente un système de mesure de température (54) servant à mesurer une température d'une préforme en matière synthétique (10).

5. Dispositif (1) selon au moins l'une quelconque des revendications précédentes,
**caractérisé en ce que**
le dispositif (1) présente au moins un système de production de microondes (38) et chaque système de chauffage (4) présente un résonateur (52) de chauffage des préformes en matière synthétique.

6. Dispositif (1) selon au moins l'une quelconque des revendications précédentes,
**caractérisé en ce que**
chaque système de chauffage (4) est réalisé de manière modulaire et peut être retiré du support (2) et/ou monté au niveau dudit support (2) dans sa globalité.

7. Dispositif (1) selon au moins l'une quelconque des revendications précédentes,
**caractérisé en ce que**
le dispositif (1) présente une unité d'alimentation de puissance centrale, laquelle alimente en énergie électrique les divers systèmes de chauffage (4).

8. Procédé de chauffage de préformes en matière synthétique (10), dans lequel les préformes en matière synthétique (10) sont transportées le long d'un chemin de transport pré-défini au moyen d'un système de transport et sont chauffées au cours dudit transport, dans lequel le système de transport présente un support (2) pouvant être déplacé, au niveau duquel une pluralité de systèmes de chauffage (4) est disposée, dans lequel chaque système de chauffage (4) chauffe au moins une préforme en matière synthétique (10) qui lui est associée et ladite préforme en matière synthétique (10) est introduite, au moyen d'un système de déplacement (46), dans une zone de chauffage (B) du système de chauffage (4) chauffant ladite préforme en matière synthétique,
**caractérisé en ce que**
chaque système de chauffage (4) est commandé par un système de commande (40) associé respectivement audit système de chauffage (4).

9. Procédé selon la revendication 8,
**caractérisé en ce qu'**
une unité de commande (12) centrale communique avec les systèmes de commande (40) des divers systèmes de chauffage (4).

10. Procédé selon la revendication 8,
**caractérisé en ce que**
l'unité de commande (12) centrale fournit, aux divers systèmes de commande (40), des instructions, qui sont sélectionnées parmi un groupe d'instructions, qui contient des instructions de démarrage pour débuter une opération de chauffage, des instructions d'arrêt pour mettre fin à l'opération de chauffage et similaire.
